(19) Europäisches Patentamt
European Patent Office
Office européen des brevets

(11) EP 1 675 885 B1

(12) **EUROPEAN PATENT SPECIFICATION**

(45) Date of publication and mention of the grant of the patent:
**05.03.2008 Bulletin 2008/10**

(21) Application number: **04809940.2**

(22) Date of filing: **13.10.2004**

(51) Int Cl.:
***C08G 65/26*** *(2006.01)* ***C08G 18/48*** *(2006.01)*

(86) International application number:
**PCT/US2004/033652**

(87) International publication number:
**WO 2005/042616 (12.05.2005 Gazette 2005/19)**

(54) **UNSATURATED MACROMERS FOR PREPARING PREFORMED STABILIZERS AND POLYMER POLYOLS**

UNGESÄTTIGTE MAKROMERE ZUR HERSTELLUNG VON VORGEFORMTEN STABILISATOREN UND POLYMERPOLYOLEN

MACROMERES NON SATURES POUR STABILISATEURS PREFORMES ET POLYOLS POLYMERES

(84) Designated Contracting States:
**AT BE BG CH CY CZ DE DK EE ES FI FR GB GR HU IE IT LI LU MC NL PL PT RO SE SI SK TR**

(30) Priority: **16.10.2003 US 687156**

(43) Date of publication of application:
**05.07.2006 Bulletin 2006/27**

(73) Proprietor: **Bayer MaterialScience LLC**
**Pittsburgh, PA 15205-9741 (US)**

(72) Inventors:
- **ADKINS, Rick, L.**
  **Hurricane, WV 25526 (US)**
- **GUELCHER, Scott**
  **Weirton, WV 26061 (US)**

(74) Representative: **Perchenek, Nils**
**Bayer MaterialScience,**
**Law & Patents,**
**Patents & Licensing**
**51368 Leverkusen (DE)**

(56) References cited:
**EP-A- 0 221 551**
**US-A- 4 202 947**
**US-A- 5 854 386**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

BACKGROUND OF THE INVENTION

The present invention relates to macromers based on polyether polyols that are useful for stabilizing polymer polyols. In addition, this invention also relates to a process for the preparation of a macromer based on a polyether polyol that is useful for stabilizing polymer polyols, to novel preformed stabilizers comprising these macromers, to a process for the preparation of these preformed stabilizers comprising these novel macromers, to their use in the preparation of polymer polyols.

Polymer polyols, also known as filled polyols, are viscous fluids comprising fine particles dispersed in polyols. Examples of solids used include styrene-acrylonitrile co-polymers and polyureas. The solids are typically prepared by *in situ* polymerization of monomers in the base polyol. Polymer polyols are commonly used for the production of polyurethane foams.

In the present specification, a macromer is defined as a molecule which comprises one or more polymerizable double bonds and one or more hydroxyl-terminated polyether tails. Various macromers are known and have previously been used to stabilize polymer polyols by copolymerization with one or more ethylenically unsaturated monomers (such as, for example, styrene and acrylonitrile). Because of similarities in chemical composition; the polyether tail(s) energetically favor association with the polyol molecules in the continuous phase rather than with the styrene-acrylonitrile co-polymer. The polyether tails extend into the continuous phase, thereby forming a "brush" layer near the particle-fluid interface which screens the attractive van der Waals forces between particles. This phenomenon is known as steric stabilization. In order to form a brush layer which effectively screens van der Waals forces several conditions must be met. The polyether tails must be similar in chemical composition to the continuous phase so that they fully extend into the continuous phase and do not adsorb to the particles. Also, the surface coverage and molecular weight must be high enough so that the interfacial brush layer is sufficiently thick to prevent agglomeration of the solid particles.

A number of methods for inducing reactive unsaturation into a polyol, thereby forming a macromer, are known in the art. U.S. Patent 6,013,731 teaches several techniques, including reaction of a polyol with unsaturated isocyanates (such as isocyanatoethylmethacrylate (IEM) or $\alpha,\alpha$-dimethyl metaisopropenyl benzylisocyanate (i.e. TMI)), or reaction of a polyol with maleic acid or maleic anhydride, followed by isomerization of the maleate bond to the more reactive fumarate bond. A macromer prepared by transesterification of a vinylalkoxy silane with a polyol has been disclosed in EP 0,162,589.

The term pre-formed stabilizer is defined as an intermediate obtained by reacting a macromer containing reactive unsaturation (e.g. acrylate, methacrylate, maleate, etc.) with monomers (i.e. acrylonitrile, styrene, methyl methacrylate, etc.), optionally in a diluent or a solvent (i.e. methanol, isopropanol, toluene, ethylbenzene, polyether polyols, etc.) to give a co-polymer (dispersion having e.g. a low solids content (e.g. <20%), or soluble grafts, etc.).

A pre-formed stabilizer (PFS) is particularly useful for preparing a polymer polyol having a lower viscosity at a high solids content. In the pre-formed stabilizer processes, a macromer is reacted with monomers to form a co-polymer of composed of macromer and monomers. These copolymers comprising a macromer and monomers are commonly referred to as pre-formed stabilizers (PFS). Reaction conditions may be controlled such that a portion of the co-polymer precipitates from solution to form a solid. In many applications, a dispersion having a low solids content (e.g., 3 to 15% by weight) is obtained. Preferably, the reaction conditions are controlled such that the particle size is small, thereby enabli ng the particles to function as "seeds" in the polymer polyol reaction.

For example, U.S. Patent 5,196,476 discloses a pre-formed stabilizer composition prepared by polymerizing a macromer and one or more ethylenically unsaturated monomers in the presence of a free-radical polymerization initiator and a liquid diluent in which the pre-formed stabilizer is essentially insoluble. EP 0,786,480 discloses a process for the preparation of a pre-formed stabilizer by polymerizing, in the presence of a free-radical initiator, from 5 to 40% by weight of one or more ethylenically unsaturated monomers in the presence of a liquid polyol comprising at least 30% by weight (based on the total weight of the polyol) of a coupled polyol which may contain induced unsaturation. These pre-formed stabilizers can be used to prepare polymer polyols which are stable and have a narrow particle size distribution. The coupled polyol is necessary to achieve a small particle size in the pre-formed stabilizer, which preferably ranges from 0.1 to 0.7 micron. U.S. Patents 6,013,731 and 5,990,185 also disclose pre-formed stabilizer compositions comprising the reaction product of a polyol, a macromer, at least one ethylenically unsaturated monomer, and a free radical polymerization initiator.

U.S. Patent 4,202,947 discloses graft copolymers of ethylenically unsaturated monomers and unsaturated polyols containing alkenyl aryl constituents.

It is known that large, bulky molecules are effective macromers because less material can be used to sterically stabilize the particles. See, for example, EP 0786480. Generally speaking, this is due to the fact that a highly branched polymer has a considerably larger excluded volume than a linear molecule (such as, e.g., a monol), and therefore less of the branched polymer is required. U.S. Patent 5,196,476 discloses that functionalities of 2 and higher, and preferably

3 and higher, are suitable to prepare macromers. EP 0,162,589 and U.S. Patent 5,990,185 describe a macromer, and its use for preparing polymer polyols, wherein the macromer is prepared by transesterification of a vinyl alkoxysilane with a polyol. The preferred macromers comprise the reaction products of vinyltrimethoxy silane, vinyltriethoxy silane, or vinyltripropoxy silane with mixtures of a group of polyether polyols characterized by functionalities ranging from 2 to 6. Such macromers would be expected to have at least 3 polyether tails. Coupling multi-functional polyols with polyisocyanates is also known and described in the field of polymer polyols as a suitable means to increase the molecular weight of the macromer. EP 0786480 discloses a process for preparation of a pre-formed stabilizer wherein the liquid polyol comprises at least 30% coupled polyol. As described therein, a high concentration of coupled polyol is useful for obtaining particles with a small particle size in the pre-formed stabilizer (PFS) and the induction of reactive unsaturation into a coupled polyol is a useful means for incorporating coupled polyol into the particles. U.S. Patent 6,013,731 discloses that the stability of the dispersion can be significantly enhanced by coupling high molecular weight polyols to form an even higher molecular weight product. Macromers prepared from polyols with low intrinsic unsaturation (< 0.020 meq/gram) are also described in U.S. Patent 6,013,731. The ’731 patent further discloses that such polyols have a low concentration of oxyalkylated, allylic unsaturation-containing monols, and are therefore advantageous because the high concentration of monols present in conventional polyols lowers the average functionality of the polyol.

Macromers based on multi-functional polyols and which have multiple sites of reactive unsaturation are described in U.S. Patent 5,196,476. As described therein, there is an upper limit to the concentration of unsaturation when making macromers by the maleic anhydride route. If the ratio of moles of unsaturation per mole of polyol is too high, then there is a higher probability that species will be formed which have more than one double bond per molecule. Typically, the ’476 patent employs from about 0,5 to about 1.5 moles, and preferably from about 0.7 to about 1.1 moles, of the reactive unsaturated compound for each mole of the alkoxylated polyol adduct.

There are also examples in the art of macromers based on "zerols." As used herein, zerols are polyethers with no terminal primary hydroxyl group. There are a series of patents issued to Dow Chemical relating to the preparation of zerols by derivatizing a polyether monol with an adduct which contains reactive unsaturation. See U.S. Patents 4,394,491, 4,477,603, 4,493,908, 4,500,675, 4,663,475, 4,513,124, 4,588,830, and 4,640,935. These patents are similar in that they use semi-batch processes with no pre-formed stabilizer, they focus mainly on acrylate/methacrylate unsaturation, and the end product when monols are used is a zerol with no free hydroxyl group. Key to each patent is the method in which the monol derivatization is performed.

U.S. Patent 5,854,386 discloses stabilizers for polymer polyols which contain both hydroxyl-functionality and unsaturation-functionality. These are prepared by oxyalkylating an unsaturated monomer having at least one oxyalkylatable hydrogen in the presence of an effective amount of a DMC catalyst, and optionally, in the presence of a free-radial polymerization inhibitor. These stabilizers preferably correspond to mixtures containing one or more of the two formulae: $R[-(-R^2-O-)_nH]_o$ or $R-(-X-\{-(R^2-O)_n-H\}_m)_o$ wherein: o is an integer between 1 and 8; n is an integer whose average value is such that the product n·o is from 10 to 500; $R^2$ is alkylene or substituted alkylene; X is a linking group; and R is a $C_{2-30}$ hydrocarbon containing at least one site of ethylenic or ethylynic (acetylenic) unsaturation, optionally substituted by non-reactive groups and optionally containing interspersed heteroatoms. R may be aliphatic, cycloaliphatic, aromatic, arylaliphatic, heteroaromatic, etc. with the proviso that when R is aromatic or heteroaromatic, the aromatic ring structure is substituted by at least one ethylenic or ethylynic radical-containing group.

U.S. Patent 4,680,358 describes macromers of polyethers having a styryl functional head group on one end, and a terminal hydroxyl group at the other end. These macromers are polymerizable through the head group with a copolymerizable monomer (such as acrylonitrile, styrene, acrylic acid, etc.), and the terminal hydroxyl group at the other end. Polymerization of this macromer yields a polymacromer with a saturated hydrocarbon backbone having polyether branches, i.e. a graft or comb copolymer. These macromers are formed by cationinc ring-opening polymerization of a cyclic ether in conjunction with an alkenyl alcohol.

The present invention describes novel macromers comprising one ethylenically unsaturated double bond and at least one monol chain terminating in a hydroxyl group, the preparation of these novel macromers, polymer polyols comprising the novel macomers, and the preparation of these polymer polyols from these novel macromers. The novel macromers of the present invention have one double bond and at least one polyether chain with a terminal hydroxy group per molecule. A key advantage of the novel macromers of the present invention vs. adducts of polyols and unsaturated compounds known and described in the art include the decreased probability that macromers having more than one double bond per molecule will be formed in the present invention. Macromers of the present invention also are advantaged over zerols as known and described in the art, due to the presence of the terminal hydroxyl group which enhances the effectiveness of the macromer. It is specifically noted that zerols as previously defined are distinguished from polyols in that they contain no terminal hydroxyl group.

## SUMMARY OF THE INVENTION

This invention relates to ethylenically unsaturated macromers, to a process for the preparation of these ethylenically unsaturated macromers, to pre-formed stabilizers based on ethylenically unsaturated macromers, to a process for the preparation of these pre-formed stabilizers.

This invention also relates to the use of these pre-formed stabilizers and ethylenically unsaturated macromers in the preparation of polymer polyols.

The process for preparing the novel macromers of the present invention comprises

(A) reacting

(1) a monofunctional compound represented by the formula:

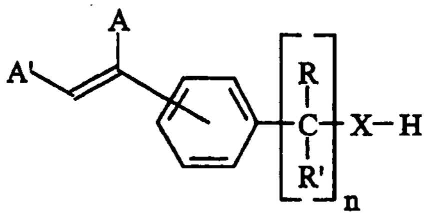

wherein:

A and A': each independently represent a hydrogen atom, an alkyl group containing from 1 to 10 carbon atoms which may or may not be substituted with one or more halogen atoms, or an aryl group containing from 5 to 6 carbon atoms which may or may not be substituted with one or more halogen atoms;
n: represents 1;
X: represents an oxygen atom or a sulfur atom;
R and R': each independently represent an alkyl group containing from 1 to 10 carbon atoms which may or may not be substituted with one or more oxygen atoms or one or more halogen atoms;

with
(2) at least one alkylene oxide containing from 2 to 8 carbon atoms, wherein the carbon atoms may be aliphatically bound, aromatically bound, cycloaliphatically bound or a combination thereof, preferred are alkylene oxides containing from 2 to 4 carbon atoms wherein the carbon atoms are aliphatically bound;
in the presence of
(3) at least one double metal cyanide alkoxylation catalyst.

The present invention also relates to novel ethylenically unsaturated macromers which correspond to the general formula:

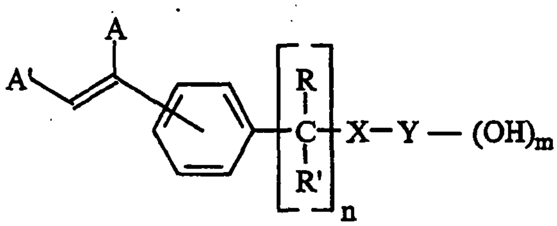

wherein:

A and A': each independently represent a hydrogen atom, an alkyl group containing from 1 to 10 carbon atoms which may or may not be substituted with one or more halogen atoms, or an aryl group containing from 5 to 6 carbon atoms which may or may not be substituted with one or more halogen atoms;
n: represents 1;
X: represents an oxygen atom or a sulfur atom;

R and R': each independently represent an alkyl group containing from 1 to 10 carbon atoms which may or may not be substituted with one or more oxygen atoms or one or more halogen atoms;

Y: represents a polymerized form of at least one alkylene oxide containing from 2 to 8 carbon atoms, wherein the carbon atoms may be aliphatically bound, aromatically bound, cycloaliphatically bound or a combination thereof;
and

m: represents an integer of from 1 to 15.

The present invention also relates to a process for preparing a pre-formed stabilizer comprising:

(A) free-radically polymerizing

(1) an ethylenically unsaturated macromer which is represented by the formula:

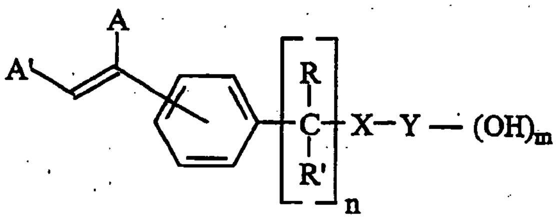

wherein:

A and A': each independently represent a hydrogen atom, an alkyl group containing from 1 to 10 carbon atoms which may or may not be substituted with one or more halogen atoms, or an aryl group containing from 5 to 6 carbon atoms which may or may not be substituted with one or more halogen atoms;

n: represents 1;

X: represents an oxygen atom or a sulfur atom;

R and R': each independently represent an alkyl group containing from 1 to 10 carbon atoms which may or may not be substituted with one or more oxygen atoms or one or more halogen atoms;

Y: represents a polymerized form of at least one alkylene oxide containing from 2 to 8 carbon atoms, wherein the carbon atoms may be aliphatically bound, aromatically bound, cycloaliphatically bound or a combination thereof;
and

m: represents an integer of from 1 to 15.

with
(2) at least one ethylenically unsaturated monomer,
in the presence of
(3) at least one free-radical polymerization initiator,
and,
(4) a liquid diluent,
and optionally
(5) a chain transfer agent.

These pre-formed stabilizers are another aspect of the present invention. This pre-formed stabilizer comprises the free-radical polymerization product of:

(1) the ethylenically unsaturated macromer as described above in the process of making a pre-formed stabilizer, with
(2) at least one ethylenically unsaturated monomer,
in the presence of
(3) at least one free-radical polymerization initiator,
and,

(4) a liquid diluent,
and optionally,
(5) a chain transfer agent.

In addition, the present invention also relates to polymer polyols comprising these pre-formed stabilizers and to a process for their preparation.

This process for preparing polymer polyols comprises: (A) free-radically polymerizing: (1) a base polyol, (2) the pre-formed stabilizer as described above, and (3) at least one ethylenically unsaturated monomer, in the presence of (4) at least one free-radical polymerization initiator, and, optionally, (5) a chain transfer agent.

These polymer polyols of the present invention comprise the free-radical polymerization product of: (1) a base polyol, (2) the pre-formed stabilizer described above, and (3) at least one ethylenically unsaturated monomer, in the presence of (4) at least one free-radical polymerization initiator, and, optionally, (5), a chain transfer agent.

The present invention also relates to polymer polyols comprising ethylenically unsaturated macromers, and to a process for the preparation of these polymer polyols.

These polymer polyols comprise the free-radical polymerization product of:

(1) a base polyol;
(2) an ethylenically unsaturated macromer represented by the formula:

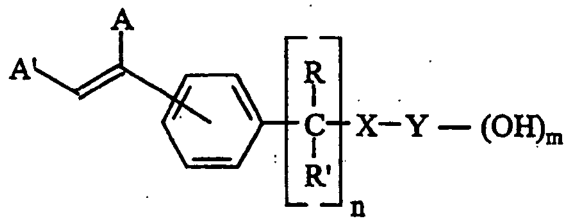

wherein:

| | |
|---|---|
| A and A': | each independently represent a hydrogen atom, an alkyl group containing from 1 to 10 carbon atoms which may or may not be substituted with one or more halogen atoms, or an aryl group containing from 5 to 6 carbon atoms which may or may not be substituted with one or more halogen atoms; |
| n: | represents 1; |
| X: | represents an oxygen atom or a sulfur atom; |
| R and R': | each independently represent an alkyl group containing from 1 to 10 carbon atoms which may or may not be substituted with one or more oxygen atoms or one or more halogen atoms; |
| Y: | represents a polymerized form of at least one alkylene oxide containing from 2 to 8 carbon atoms, wherein the carbon atoms may be aliphatically bound, aromatically bound, cycloaliphatically bound or a combination thereof; and |
| m: | represents an integer of from 1 to 15; |

and
(3) at least one ethylenically unsaturated monomer;
in the presence of
(4) at least one free-radical polymerization initiator;
and, optionally,
(5) a chain transfer agent.

The process for preparing these polymer polyols comprises (A) free-radically polymerizing: (1) a base polyol, (2) the ethylenically unsaturated macromer as described above, and (3) at least one ethylenically unsaturated monomer, in the presence of (4) at least one free-radical polymerization initiator, and, optionally, (5) a chain transfer agent. Suitable ethylenically unsaturated macromers for this process are those as described previously in the polymer polyols prepared directly from ethylenically unsaturated macromers.

DETAILED DESCRIPTION OF THE INVENTION

Suitable monofunctional compounds to be reacted with an alkylene oxide in the process of preparing the ethylenically unsaturated macromers of the invention include those monofunctional compounds represented by the formula:

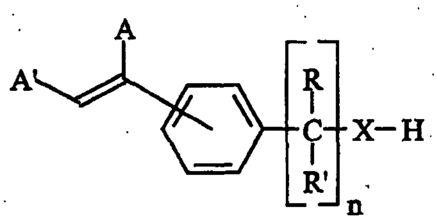

wherein:

A and A': each independently represent a hydrogen atom, an alkyl group containing from 1 to 10 carbon atoms which may or may not be substituted with one or more halogen atoms, or an aryl group containing from 5 to 6 carbon atoms which may or may not be substituted with one or more halogen atoms;
n: represents 1;
X: represents an oxygen atom or a sulfur atom;
R and R': each independently represent an alkyl group containing from 1 to 10 carbon atoms which may or may not be substituted with one or more oxygen atoms or one or more halogen atoms.

In the above formula, it is preferred that:

A and A': each independently represent a hydrogen atom, a methyl group, an ethyl group, a propyl group, a butyl group, a hexyl group, a cyclohexyl group, a benzyl group, a phenyl group, or a chloromethyl group;
n: represents the number 1;
X: represents an oxygen atom or a sulfur atom;
and
R and R': each independently represent a methyl group, an ethyl group, a propyl group, a butyl group, a pentyl group, a cyclopentyl group, a hexyl group, a cyclohexyl group, or a phenyl group.

These monofunctional compounds such as for example, 3-isopropenylcumenol can be prepared by several methods. One suitable method for the preparation of 3-isopropenylcumenol is known and described in, for example, U.S. Patent 3,622,636, Meta-phenylene-bis-(di-methyl-carbinol) and 10% acetic acid solution are heated to give 3-isoprepenyl-cumenol.

Suitable examples of such monofunctional compounds include compounds such as 3-isopropenylcumenol, 4-isopropenylcumenol.

Suitable alkylene oxides to be reacted with these monofunctional compounds in the process of preparing an ethylenically unsaturated macromer include compounds selected from the group consisting of ethylene oxide, propylene oxide, glycidol, butylene oxide, 1,2-epoxyoctane, styrene oxide, epichlorohydrin, epibromohydrin, and mixtures thereof. Preferred alkylene oxides for the present invention include ethylene oxide, propylene oxide, butylene oxide, and glycidol. It is more preferred that the alkylene oxides used in the present invention are those which are free from hydroxyl groups.

Suitable alkoxylation catalysts for the process of preparing the ethylenically unsaturated macromer are DMC (double metal cyanide) catalysts.

Preferred alkoxylation catalysts include double metal cyanide (DMC) catalysts such as, for example,those disclosed in U.S. Patent 6,018,017, and specifically at column 5, line 22 through column 6, line 6 therein.

Cationic alkoxylation catalysts as described in, for example, U.S. Patent 4,680,358, being strongly acidic, always yield cyclic oligomers of the alkylene oxides regardless of the catalyst concentration. The oligomers are difficult to remove completely and impart a strong odor to the polyether polyol product, even at low parts per million (ppm) levels. In addition, when n = 1, the monofunctional compound contains a tertiary alcohol group, which is known to readily dehydrate under acidic conditions (see Advanced Organic Chemistry, by Jerry March, 2nd Edition, 1977, p.923). Thus, U.S. Patent 4,680,358 specifies that only primary and secondary alcohols provide the desired macromers described and claimed therein.

In the process for preparing the ethylenically unsaturated macromer, the monofunctional compound is typically reacted with the alkylene oxide at temperatures of 60 to 180°C for time periods of from 1 to 10 hours, in the presence of the alkoxylation catalyst. It is preferred that this reaction is at temperatures of 90 to 140°C for a time of from 2 to 7 hours.

The ethylenically unsaturated macromers of the present invention correspond to the general formula:

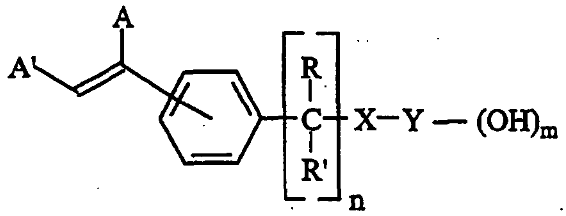

wherein:

| | |
|---|---|
| A and A': | each independently represent a hydrogen atom, an alkyl group containing from 1 to 10 carbon atoms which may or may not be substituted with one or more halogen atoms, or an aryl group containing from 5 to 6 carbon atoms which may or may not be substituted with one or more halogen atoms; |
| n: | represents 1; |
| X: | represents an oxygen atom or a sulfur atom; |
| R and R': | each independently represent an alkyl group containing from 1 to 10 carbon atoms which may or may not be substituted with one or more oxygen atoms or one or more halogen atoms; and |
| Y: | represents a polymerized form of at least one alkylene oxide containing from 2 to 8 carbon atoms, wherein the carbon atoms may be aliphatically bound, aromatically bound, cycloaliphatically bound or a combination thereof; and |
| m: | represents an integer of from 1 to 15. |

In the above formula, it is preferred that:

| | |
|---|---|
| A and A': | each independently represent a hydrogen atom, a methyl group, an ethyl group, a propyl group, a butyl group, a hexyl group, a cyclohexyl group, a benzyl group, a phenyl group, or a chloromethyl group; |
| n: | represents 1; |
| X: | represents an oxygen atom, or a sulfur atom; |
| R and R': | each independently represent a methyl group, an ethyl group, a propyl group, a butyl group, a pentyl group, a cyclopentyl group, a hexyl group, a cyclohexyl group or a phenyl group; |
| Y: | represents a polymerized form of propylene oxide, ethylene oxide, butylene oxide, glycidol, or mixtures thereof; and |
| m: | represents an integer of from 1 to 10, more preferably from 1 to 8 and most preferably from 1 to 6. |

In accordance with the present invention, these ethylenically unsaturated macromers preferably have a molecular weight ranging from 170 to 30,000; more preferably from 3,000 to 20,000, and most preferably from 3,000 to 10,000. The ethylenically unsaturated macromers of the present invention contain 1 unsaturation group per molecule, and contain from 1 to 15 hydroxyl groups per molecule. It is preferred that these macromers contain from 1 to 10 hydroxyl groups per molecule, more preferably from 1 to 8 hydroxyl groups per molecule, and most preferably from 1 to 6 hydroxyl groups per molecule. The molecular weight of the macromer must be balanced between being too low and being too high. Macromers having too low molecular weights result in too small of size macromers to adequately screen the attractive van der Waals forces between particles, which results in poor dispersion stability. If the molecular weight of the macromer is too high, the effective volume of the particles is significantly increased, which results in high viscosity. Furthermore, unreacted macromer in the continuous phase may also contribute to high viscosity. It is preferred that the macromers have moderate molecular weights (i.e., from 3,000 to 10,000) to ensure both good stability and low viscosity in the final polymer polyols.

In accordance with the process for preparing a pre-formed stabilizer, an ethylenically unsaturated macromer is free-radically polymerized with at least one ethylenically unsaturated monomer in the presence of at least one free-radical polymerization initiator and, a liquid diluent, and, optionally a chain transfer agent.

In pre-formed stabilizers and the process of making the pre-formed stabilizers, the ethylenically unsaturated macromers may be used. The ethylenically unsaturated macromers for this aspect of the invention correspond to the formula:

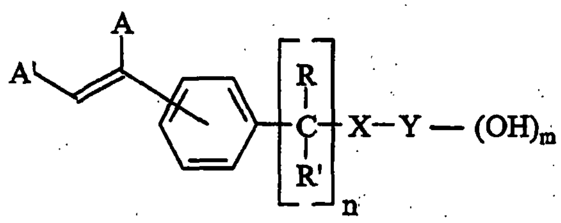

wherein:

A and A': each independently represent a hydrogen atom, an alkyl group containing from 1 to 10 carbon atoms which may or may not be substituted with one or more halogen atoms, or an aryl group containing from 5 to 6 carbon atoms which may or may not be substituted with one or more halogen atoms;
n: represents 1;
X: represents an oxygen atom or a sulfur atom;
R and R': each independently represent an alkyl group containing from 1 to 10 carbon atoms which may or may not be substituted with one or more oxygen atoms or one or more halogen atoms;
and
Y: represents a polymerized form of at least one alkylene oxide containing from 2 to 8 carbon atoms, wherein the carbon atoms may be aliphatically bound, aromatically bound, cycloaliphatically bound or a combination thereof,
and
m: represents an integer of from 1 to 15.

In the above formula, it is preferred that:

A and A': each independently represent a hydrogen atom, a methyl group, an ethyl group, a propyl group, a butyl group; a hexyl group, a cyclohexyl group, a benzyl group, a phenyl group, or a chloromethyl group;
n: represents 1;
X: represents an oxygen atom, or a sulfur atom;
R and R': each independently represent a hydrogen atom, a methyl group, an ethyl group, a propyl group, a butyl group, a pentyl group, a cyclopentyl group, a hexyl group, a cyclohexyl group or a phenyl group;
Y: represents a polymerized form of propylene oxide, ethylene oxide, butylene oxide, glycidol, or mixtures thereof;
and
m: represents an integer of from 1 to 10, more preferably from 1 to 8 and most preferably from 1 to 6.

In a particularly preferred embodiment of the pre-formed stabilizers of the present invention, the ethylenically unsaturated macromers as described and claimed herein are suitable ethylenically unsaturated macromers for pre-formed stabilizers and the process of making these.

Suitable ethylenically unsaturated monomers for this aspect of the invention include, for example, aliphatic conjugated dienes such as butadiene and isoprene; monovinylidene aromatic monomers such as styrene, α-methylstyrene, (t-butyl)styrene, chlorostyrene, cyanostyrene and bromostyrene; α,β-ethylenically unsaturated carboxylic acids and esters thereof such as acrylic acid, methacrylic acid, methyl methacrylate, ethyl acrylate, 2-hydroxyethyl acrylate, butyl actylate, itaconic acid, maleic anhydride and the like; α,β-ethylenically unsaturated nitriles and amides such as acrylonitrile, methacrylonitrile, acrylamide, methacrylamide, N,N-dimethyl acrylamide, N-(dimethylaminomethyl)acrylamide and the like; vinyl esters such as vinyl acetate; vinyl ethers, vinyl ketones, vinyl and vinylidene halides as well as a wide variety of other ethylenically unsaturated materials which are copolymerizable with the aforementioned monomeric adduct or reactive monomer. It is understood that mixtures of two or more of the aforementioned monomers are also suitable employed in making the pre-formed stabilizer. Of the above monomers, the monovinylidene aromatic monomers, particularly styrene, and the ethylenically unsaturated nitriles, particularly acrylonitrile are preferred.

When using a mixture of monomers, it is preferred to use a mixture of two monomers. These monomers are typically used in weight ratios of from 80:20 (styrene:acrylonitrile) to 50:50 (S:AN), and preferably of from 75:25 (S:AN) to 65:40 (S:AN).

Suitable free-radical polymerization initiators for the present invention include, for example, peroxides including both alkyl and aryl hydroperoxides, persulfates, perborates, percarbonates, azo compounds, etc. Some specific examples include catalysts such as hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis (isobutyronitrile), 2,2'-azo bis-(2-methylbutyronitrile), etc.

Suitable catalysts concentrations range from 0.01 to 2% by weight, preferably from 0.05 to 1% by weight, and most preferably 0.05 to 0.3% by weight, based on the total weight of the components (i.e. 100% by weight of the combined weight of the macromer, the ethylenically unsaturated monomer, the free-radical polymerization initiator and, the liquid diluent and optionally, the chain transfer agent.

Suitable diluents for the pre-formed stabilizers of the present invention include, for example, compounds such as mono-ols (i.e., monohydroxy alcohols), polyols, hydrocarbons, ethers etc., and mixtures thereof. Suitable mono-ols include all alcohols which contain at least one carbon atom, such as, for example, methanol, ethanol, n-propanol, isopropanol, n-butanol, sec.-butanol, tert-butanol, n-pentanol, 2-pentanol, 3-pentanol, etc. and mixtures thereof. A preferred mono-ol is isopropanol.

Suitable polyols comprise poly(oxypropylene) glycols, triols and higher functionality polyols. Such polyols include poly(oxypropylene-oxyethylene) polyols; however, desirably the oxyethylene content should comprise less than 50% of the total and, preferably less than 20%. The ethylene oxide can be incorporated in any fashion along the polymer chain. Stated another way, the ethylene oxide can be either incorporated in internal blocks, as terminal blocks, or may be randomly distributed along the polymer chain. It is well known in the art that polyols contain varying amounts of non-induced unsaturation. Preferred polyols of the present invention are those which are prepared using DMC catalysis. These polyols have low unsaturation, typically 0.02 meq/g or less as measured using ASTM D2849-69. The extent of unsaturation does not affect in any adverse way the formation of the polymer polyols in accordance with the present invention.

For purposes of the present invention, useful polyols should have a number average molecular weight of 400 or greater, the number average being used herein being the theoretical, hydroxyl number derived value. The true number average molecular weight may be somewhat less, depending upon the extent to which the true molecular functionality is below the starting or theoretical functionality.

The polyols employed can have hydroxyl numbers which vary over a wide range. In general, the hydroxyl numbers of the polyols employed in the Invention can range from 20 and lower, to 280 and higher. The hydroxyl number is defined as the number of milligrams of potassium hydroxide required for the complete hydrolysis of the fully phthalated derivative prepared from 1 gram of polyol. The hydroxyl number can also be defined by the equation:

$$OH = (56.1 - 1000 \times f)/m.w.$$

where:

| | |
|---|---|
| OH = | hydroxyl number of the polyol; |
| f = | functionality, that is, average number of hydroxyl groups per molecule of the polyol; and |
| m.w. = | molecular weight of the polyol. |

The exact polyol employed depends upon the end use of the polyurethane product to be produced. The molecular weight of the hydroxyl number is selected properly to result in flexible or semi-flexible foams or elastomers when the polymer polyol produced from the polyol is converted to a polyurethane. The polyols preferably possess a hydroxyl number of from 50 to 150 for semi-flexible foams and from 30 to 70 for flexible foams. Such limits are not intended to be restrictive, but are merely illustrative of the large number of possible combinations of the above polyol coreactants.

While also not preferred, any other type of known polyol may also be used. Among the polyols which can be employed are one or more polyols from the following classes of compositions, known to those skilled in the art of polyurethane chemistry: (a) alkylene oxide adducts of non-reducing sugars and sugar derivatives; (b) alkylene oxide adducts of phosphorus and polyphosphorus acids; (c) alkylene oxide adducts of polyphenols; (d) the polyols from natural oils such as castor oil, and the like; (e) alkylene oxide adducts of polyhydroxyalkanes other than those already described herein.

Illustrative alkylene oxides of polyhydroalkanes include, among others, the alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-,1,4-, 1,6- and 1,8-dihydroxyoctane, 1,10-dihydroxydecane, glycerol, 1,2,4-trihydroxybutane, 1,2,6-trihydroxyhexane, 1,1,1-trimethylolpropane, pentaerythritol, caprolactone, polycaprolactone, xylitol, arabitol, sorbitol, mannitol, and the like.

Another class of polyols which can be employed are the alkylene oxide adducts of the non-reducing sugars, wherein the alkylene oxides have from 2 to 4 carbon atoms, Among the non-reducing sugars and sugar derivatives contemplated are sucrose, alkyl glycosides such as methyl glucoside, ethylglucoside, and the like; glycol glucosides such as ethylene glycol glucoside, propylene glycol glucoside, glycerol glucoside, 1,2,6-hexanetriol glucoside, and the like, as well as the alkylene oxide adducts of the alkyl glucosides as set forth in U.S. Patent 3,073,788.

A still further useful class of phenol is the polyphenols, and preferably the alkylene oxide adducts thereof wherein the alkylene oxide adducts have from 2 to 4 carbon atoms. Among the polyphenols which are contemplated are, for example, bisphenol A, bisphenol F, condensation products of phenol and formaldehyde, the novolac resins, condensation products of various phenolic compounds and acrolein; the simplest members of this call being the 1,1,3-tris(hydroxyphenyl)propanes, condensation products of various phenolic compounds and glyoxal, glutaraldehyde, and other dialdehydes, the simplest members of this call being the 1,1,2,2-tetrakis(hydroxyphenol)ethanes, and the like.

The alkylene oxide adducts of phosphorus and polyphosphorus acids are another useful class of polyols. Ethylene oxide, 1,2-epoxypropane, the epoxybutanes, 3-chloro-1,2-epoxypropane, and the like are preferred alkylene oxides. Phosphoric acid, phosphorus acid, the polyphosphoric acids such as tripolyphosphoric acid, the polymetaphosphoric acids, and the like are desirable for use in this connection.

Preferred polyol components to be used as diluents in the present invention typically include, for example, the alkylene oxide adducts of suitable starter materials having 4 or more hydroxyl, groups such as; for example, pentaerythritol, sorbitol, diether of sorbitol, mannitol, diether of mannitol, arabitol, diether of arabitol, sucrose, oligomer of polyvinyl alcohol or glycidol, mixtures thereof, etc.

When using a mixture of a mono-ol and a polyol as the diluent, the polyol preferably comprises only a minor amount of the diluent and the mono-ol comprises a major amount. In general, the polyol will comprise less than 30 weight percent of the diluent, preferably less than 20 weight percent, and most preferably less than 15 weight percent. The amount of the polyol component present in the diluent is below the concentration at which gelling occurs in the pre-formed stabilizer.

Generally, the quantity of diluent is >40% by weight, based on 100% by weight of the PFS (pre-formed stabilizer).

Chain transfer agents may also be present in the pre-formed stabilizers of the present invention and the process of making the pre-formed stabilizers. Suitable chain transfer agents for this aspect of the present invention include, for example, isopropanol, ethanol, tert-butanol, toluene, ethylbenzene, triethylamine, dodecylmercaptan, octadecylmercaptan, carbon tetrachloride, carbon tetrabromide, chloroform, methylene chloride. Chain transfer agents are also commonly referred to as molecular weight regulators. These compounds are employed in conventional amounts to control the molecular weight of the copolymerizate.

Suitable processes for preparing the pre-formed stabilizers are similar to known methods described In, for example, U.S. Patents 4,148,840, 4,242,249, 4,954,561, 4,745,153, 5,494,957, 5,990,185, 6,455,603, 4,327,005,4,334,049,4,997,857, 5,196,476, 5,268,418, 5,854,386, 5,990,232, 6,013,731, 5,554,662, 5,594,066, 5,814,699 and 5,854,358. In general, the process of preparing the pre-formed stabilizer is similar to the process of preparing the polymer polyol. The temperature range is not critical and may vary from 80 to 150°C, and preferably from 115 to 125°C. The catalyst and temperature should be selected such that the catalyst has a reasonable rate of decomposition with respect to the hold-up time in the reactor for a continuous flow reactor or the feed time for a semi-batch reactor.

Mixing conditions employed in this process are obtained by using a back mixed reactor (e.g. a stirred flask or stirred autoclave). The reactors of this type keep the reaction mixture relatively homogeneous and so prevent localized high monomer to macromer ratios such as occur in tubular reactors, where all of the monomer is added at the beginning of the reactor.

In a preferred embodiment, the pre-formed stabilizer of the present invention comprises dispersions in the diluent and any unreacted monomer in which the pre-formed stabilizer is probably present as individual molecules or as groups of molecules in micelles or on the surface of small polymer particles.

The combination of conditions selected for the preparation of the pre-formed stabilizer should not lead to cross-linking or gel formation in the pre-formed stabilizer which can adversely affect the ultimate performance in preparing the polymer polyol composition. Combinations of too low a diluent concentration, too high a precursor and/or monomer concentration, too high a catalyst concentration, too long of a reaction time, and too much unsaturation in the precursor can result in ineffective preformed stabilizer from cross-linking or gelling.

Particularly preferred processes of preparing the preformed stabilizers of the present invention include those as described in, for example, U.S. Patent 5,196,476 and U.S. Patent 6,013,731.

Preferred diluents and relative concentrations, ethylenically unsaturated monomers and relative concentrations, free-radical initiators and relative concentrations, and process conditions are disclosed in U.S. Patent 5,196,476 and U.S. Patent 6,013,731.

Obviously, the macromers suitable for the present invention differ from the macromers described by these references, thus resulting in structurally different preformed stabilizers.

The polymer polyols (i.e., stable dispersions) comprise the free-radical polymerization product of a base polyol, the pre-formed stabilizer described above, and one or more ethylenically unsaturated monomers in the presence of at least one free-radical initiator, and optionally, a chain transfer agent, and the process for the preparation of polymer polyols (i.e., stable dispersion) comprises free-radically polymerizing these components. The resultant polymer polyols exhibit high solids contents, i.e., from 30 to 60% by weight, based on the total weight of the resultant polymer polyol. It is preferred that the solids content of the polymer polyols ranges from 40 to 50% by weight. These polymer polyols also exhibit low viscosities, i.e. from 2000 to 10,000 cSt, and preferably 4,000 to 6,000 cSt; good filterability; and are preferably white in color.

Suitable base polyols include, for example, base polyols such as, for example, polyether polyols. Suitable polyether polyols include those having a functionality of at least 2, preferably at least 2, and more preferably at least 3. The functionality of suitable polyether polyols is less than or equal to 8, preferably less than or equal to 6, and most preferably less than or equal to 5. The suitable polyether polyols may also have functionalities ranging between any combination of these upper and lower values, inclusive. The OH numbers of suitable polyether polyols is at least 10, preferably at least 15, and most preferably at least 20. Polyether polyols typically also have OH numbers of less than or equal to 180, preferably less than or equal to 100, and most preferably less than or equal to 70. The suitable polyether polyols may also have OH numbers ranging between any combination of these upper and lower values, inclusive. The (number average) molecular weights of suitable polyether polyols is typically greater than 600, preferably at least 2,000 and most preferably at least 3,000. Polyether polyols typically have (number average) molecular weights of less than or equal to 15,000, more preferably less than or equal to 12,000 and most preferably less than or equal to 8,000. The suitable polyether polyols may also have (number average) molecular weights ranging between any combination of these upper and lower values, inclusive. These polyether polyols may also have functionalities ranging from 2 to 8, preferably from 2 to 6, and most preferably from 3 to 5; OH numbers ranging from 10 to 180, preferably from 15 to 100, and most preferably from 20 to 70; and (number average) molecular weights ranging from greater than 600 to 15,000, preferably 2,000 to 12,000 and most preferably 3,000 to 8,000.

Examples of such compounds include polyoxyethylene glycols; triols, tetrols and higher functionality polyols, polyoxypropylene glycols, triols, tetrols and higher functionality polyols, mixtures thereof, etc. When mixtures as used, the ethylene oxide and propylene oxide may be added simultaneously or sequentially to provide internal blocks, terminal blocks or random distribution of the oxyethylene groups and/or oxypropylene groups in the polyether polyol. Suitable starters or initiators for these compounds include, for example, ethylene glycol, propylene glycol, diethylene glycol, dipropylene glycol, tripropylene glycol, trimethyolpropane, glycerol, pentaerythritol, sorbitol, sucrose, ethylenediamine, toluene diamine, etc. By alkoxylation of the starter, a suitable polyether polyol for the base polyol component can be formed.

Other suitable base polyols include alkylene oxide adducts of non-reducing sugars and sugar derivatives, alkylene oxide adducts of phosphorus and polyphosphorus acids, alkylene oxide adducts of polyphenols, polyols prepared from natural oils such as, for example, castor oil, etc., and alkylene oxide adducts of polyhydroxyalkanes other than those described above.

Illustrative alkylene oxide adducts of polyhydroxyalkanes Include, for example, alkylene oxide adducts of 1,3-dihydroxypropane, 1,3-dihydroxybutane, 1,4-dihydroxybutane,1,4-, 1,5- and 1,6-dihydroicyhexane, 1,2-, 1,3-, 1,4-1,6- and 1,8-dihydroxyoctant, 1,10-dihydroxydecane; glycerol, 1,2,4-tirhydroxybutane, 1,2,6-trihydroxyhexane, 1,1,1-trimethylolethane, 1,1,1-trimethylolpropane, pentaerythritol, caprolactane; polycaprolactone, xylitol, arabitol, sorbito!, mannitol, and the like.

Other polyols which can be employed include the alkylene oxide adducts of non-reducing sugars, wherein the alkoxides have from 2 to 4 carbon atoms. Non-reducing sugars and sugar derivatives include sucrose, alkyl glycosides such as methyl glycoside, ethyl glucoside, etc. glycol glucosides such as ethylene glycol glycoside, propylene glycol glucoside, glycerol glucoside,1,2,6-hexanetriol glucoside, etc. as well as alkylene oxide adducts of the alkyl glycosides as disclosed in U.S. Patent. 3,073,788. Other suitable polyols Include the polyphenols and preferably the alkylene oxide adducts thereof wherein the alkylene oxides have from 2 to 4 carbon atoms. Among the polyphenols which are suitable include, for example bisphenol A, bisphenol F, condensation products of phenol and formaldehyde, the novolac resins, condensation products of various phenolic compounds and acrolein, including the 1,1,3-tris(hydroxyphenyl)propanes, condensation products of various phenolic compounds and glyoxal, glutaraldehyde, other dialdehydes, including the 1,1,2,2-tetrakis (hydroxyphenol)ethanes, etc.

The alkylene oxide adducts of phosphorus and polyphosphorus acid are also useful polyols, These include ethylene oxide, 1,2-epoxypropane, the epoxybutanes, 3-chloro-1,2-epoxypropane, etc. as preferred alkylene oxides. Phosphoric acid, phosphorus acid, the polyphosphoric acids such as, tripolyphosphoric acid, the polymetaphosphoric acids, etc. are desirable for use herein.

Pre-formed stabilizers for this aspect of the present invention are those described herein above.

The ethylenically unsaturated monomers suitable for the polymer polyols and the process of preparing these include those ethylenically unsaturated monomers described above with respect to the preparation of the pre-formed stabilizer. Other suitable monomers include, for example, aliphatic conjugated dienes such as butadiene and isoprene; monovinylidene aromatic monomers, such as styrene, $\alpha$- methylstyrene, (t-butyl)styrene, chlorostyrene, cyanostyrene and bromostyrene; $\alpha,\beta$-ethylenically unsaturated carboxylic acids and esters thereof such as acrylic acid, methacrylic acid, methyl methacrylate, ethyl acrylate, 2-hydroxyethyl acrylate, butyl actylate, itaconic acid, maleic anhydride and the like; $\alpha,\beta$-ethylenically unsaturated nitriles and amides such as acrylonitrile, methacrylonitrile, acrylamide, methacrylamide, N,N-dimethyl acrylamide, N-(dimethylaminomethyl)acrylamide and the like; vinyl esters such as vinyl acetate; vinyl ethers, vinyl ketones, vinyl and vinylidene halides as well as a wide variety of other ethylenically unsaturated materials which are copolymerizable with the aforementioned monomeric adduct or reactive monomer. It is understood that mixtures of two or more of the aforementioned monomers are also suitable employed in making the pre-formed stabilizer. Of the above monomers, the monovinylidene aromatic monomers, particularly styrene, and the ethylenically unsaturated nitriles, particularly acrylonitrile are preferred.

It is preferred that these ethylenically unsaturated monomers include styrene and its derivatives, acrylonitrile, methyl acrylate, methyl methacrylate, vinylidene chloride, with styrene and acrylonitrile being particularly preferred monomers.

It is preferred styrene and acrylonitrile are used in sufficient amounts such that the weight ratio of styrene to acrylonitrile (S:AN) may is from 80:20 to 50:50, more preferably from 75:25 to 60:40. These ratios are suitable for polymer polyols and the processes of preparing them, regardless of whether they comprise the ethylenically unsaturated macromers or the pre-formed stabilizers of the present invention.

Overall, the quantity of ethylenically unsaturated monomer(s) present in the polymer polyols comprising a pre-formed stabilizer is at least about 30% by weight, based on 100% by weight of the polymer polyol. It is preferred that the solids content is from 35 to 70% by weight, and most preferably from 40 to 50% by weight.

Overall, the quantity of ethylenically unsaturated monomer(s) present In the polymer polyols comprising the ethylenically unsaturated macromers of the present invention is at least 20% by weight, based on 100% by weight of the polymer polyol. It is preferred that the solids content is from 20 to 45% by weight.

Suitable free-radical initiators include those as described previously for the preparation of the pre-formed stabilizers. Among the useful initiators are those catalysts having a satisfactory half-life within the temperature ranges used in forming the stabilizer, i.e. the half-life should be 25% or, less of the residence time in the reactor at any given time. Preferred initiators for this portion of the invention include acyl peroxides such as didecanoyl peroxide and dilauroyl peroxide, alkyl peroxides such as t-butyl peroxiy-2-ethylhexanoate, t-butylperpivalate, t-amyl peroctoate, 2,5-dimethyl-hexane-2,5-di-per-2-ethyl hexoate, t-butyl pemeodecanoate, t-butylperbenzoate and 1,1-dimethyl-3-hydroxybutyl peroxy-2-ethylhexanoate, and azo catalysts such as azobis(isobutyronitrile), 2,2'-azo bis-(2-methoxylbutyronitrile), and mixtures thereof. Most preferred, are the acyl peroxides described above and the azo catalysts. A particularly preferred initiator comprises azobis(isobutyronitrile).

The quantity of initiator used herein is not critical and can be varied within wide limits. In general, the amount of initiator ranges from 0.01 to 2 % by weight, based on 100% by weight of the final polymer polyol. Increases in catalyst concentration result in increases in monomer conversion up to a certain point, but past this, further increases do not result in substantial increases in conversion. The particular catalyst concentration selected will usually be an optimum value, taking all factors into consideration including costs.

Suitable chain transfer agents for the present invention include, for example, isopropanol, ethanol, tert-butanol, toluene, ethylbenzene, triethylamine, dodecylmercaptan, octadecylmercaptan, carbon tetrachloride, carbon tetrabromide, chloroform, methylene chloride. Chain transfer agents are also commonly referred to as molecular- weight regulators. These compounds are employed in conventional amounts to control the molecular weight of the copolymerizate.

Polymer polyols comprising the pre-formed stabilizers of the present invention are prepared by utilizing the processes as disclosed in, for example, U.S. Patents 4.148,840.4.242,249,4.954,561,4.745,153, 5,494,957, 5,990,185, 6,455,603, 4,327,005, 4,334,049, 4,997,857, 5,196,476, 5,268,418, 5;854,386, 5,990,232, 6,013,731, 5,554,662, 5,594,066, 5,814,699 and 5,854,358. As described therein, a low monomer to polyol ratio is maintained throughout the reaction mixture during the process. This is achieved by employing conditions that provide rapid conversion of monomer to polymer. In practice, a low.monomer to polyol ratio is maintained, in the case of semi-batch and continuous operation, by control of the temperature and mixing conditions and, in the case of semi-batch operation, also by slowly adding the monomers to the polyol.

The various components of the polymer polyols which comprise the free-radical polymerization product of (1) a base polyol, (2) an ethylenically unsaturated macromer, and (3) at least one ethylenically unsaturated monomer, in the presence of (4) at least one free-radical polymerization initiator and (5) a chain transfer agent, include those components described above with respect to the polymer polyols comprising the preformed stabilizers of the invention. Of course, these polymer polyols use the ethylenically unsaturated macromers described above as reactants in the pre-formed stabilizers and In the process of preparing the pre-formed stabilizers. The remaining components, their relative

amounts and/or ratios are as described above, unless, otherwise stated.

These polymer polyols comprising an ethylenically unsaturated macromers which corresponds to those described above for the pre-formed stabilizers, are prepared by utilizing the processes as disclosed in, for example, U.S. Patents 3,875,258, 3,931,092, 3,950,317, 3,953,393, 4,014,846; 4,093,573, 4,372,005, 4,334,049, 4,454,255, 4,458,038, 4,689,354, 4,690,956, Re 29,014, 4,305,861; 5,093,412, 5,254,667, 6,172,164 and Re 33,291, as well as in U.S. Patents 4,524,157, 4,539,340, Re 28,715 and Re 29,118.

In the polymer polyols comprising ethylenically unsaturated macromers, the ethylenically unsaturated macromers as described and claimed herein are used as ethylenically unsaturated macromers for polymer polyols and the process of making these.

The temperature range is not critical, and may vary from 100°C to 140°C or perhaps greater, the preferred range being from 115 to 125°C. As has been noted herein, the catalyst and temperature should be selected such that the catalyst has a reasonable rate of decomposition with respect to the hold-up time in the reactor for a continuous flow reactor or the feed time for a semi-batch reactor.

The mixing conditions employed are those obtained using a back-mixer (e.g., a stirred flask or stirred autoclave). The reactors of this type keep the reaction mixture relatively homogeneous and so prevent localized high monomer to polyol ratios such as occur in certain tubular reactors, e.g., in the first stages of "Marco" reactors when such reactors are operated with all the monomer added to the first stage.

The utilization of the processes as described in U.S. 5,196,476 and 6,013,731 are preferred in this aspect of the present invention since these allow for the preparation of polymer polyols with a wide range of monomer compositions, polymer contents and polymer polyols that could not be otherwise prepared with the necessary requisite stability. However, whether the utilization of the processes disclosed in U.S. 5,916,476 and 6,013,731 are essential depends on whether the process parameters are such that a satisfactory polymer polyol can be prepared without using either of these processes.

The polymer polyols comprise dispersions in which the polymer particles (the same being either individual particles or agglomerates of individual particles) are relatively small in size and, in the preferred embodiment, are all essentially less than about one to three microns. However, when high contents of styrene are used, the particles will tend to be larger, but the resulting polymer polyols are higher useful, particularly when the end use application requires as little scorch as possible. In the preferred embodiment, essentially all of the product (i.e., about 99% or more) will pass through the filter employed in the filtration hindrance (filterability) test that will be described in conjunction with the Examples, This insures that the polymer polyol products can be successfully processed in all types of the relatively sophisticated machine systems now in use for large volume production of polyurethane products, including those employing impingement-type mixing which necessitate the use of filters that cannot tolerate any significant amount of relatively large particles. Less rigorous applications are satisfied when 50% of the product passes through the filer. Some applications may also find useful products in which only 20% or even less passes through the filer. Accordingly, the polymer polyols of the present invention desirably contemplate the products in which only 20% pass through the filter, preferably at least 50%, and most preferably, essentially all.

The filtration hindrance test presents the rigorous test of polymer polyol stability, and accordingly, while satisfactory filtration hindrance characteristics are certainly to be preferred, commercially stable polymer polyols for a variety of applications may be satisfactory defined by their viscosity and centrifugible solids level (this test being also described in connection with the Examples). Thus, polymer polyols are considered stable as long as the viscosity is no more than 6,000 cSt at 25°C and the centrifugible solids are less than 10%, preferably less than 5%.

In accordance with the present invention, the stabilizer is present in an amount sufficient to insure that satisfactory stabilization will result in the desired filtration hindrance, centrifugible solids level and viscosity. In this regard, the quantity of pre-formed stabilizer generally ranges from 1 to 6% (preferably from 1 to 4%) by weight, based on the total feed. As one skilled in the art knows and understands, various factors including, for example, the free-radical initiator, the solids content, the weight ratio of S:AN, process conditions, etc., will effect the optimum quantity of pre-formed stabilizer.

Suitable polymer polyols for polyurethanes may be either those prepared directly from ethylenically unsaturated macromers, or those prepared from pre-formed stabilizers which are based on ethylenically unsaturated macromers. These polyurethanes comprise the reaction product of a polyisocyanate component or prepolymer thereof, with an isocyanate-reactive component comprising the polymer polyols of the invention. The processes for preparing these polyurethanes comprises reacting a polyisocyanate component or prepolymer thereof, with an isocyanate-reactive component comprising the polymer polyols.

In addition to use as stabilizers in polyether polymer polyol production, the reactive unsaturation-containing stabilizers of the subject invention may also be used for other products, for example, but not by limitation, to form impact modifiers. For example, preformed vinyl polymer impact modifiers may be prepared by reacting the reactive unsaturation-containing stabilizer with one or more polymerizable vinyl monomers such as those discussed previously, as well as multiply unsaturated monomers such as butadiene and the like. The polymerization may be affected neat, in solution in

suitable solvent, or in ordinary or reverse emulsion in an aqueous system. The reactive unsaturation-containing stabilizers can also be used as a stabilizer for cement additive by copolymerizing with monomers such as acrylic acid. The stabilizers may also serve as a reactant in radiation cured coatings.

As used herein, the phrase "polyol feed" refers to the amount of base polyol feed present in the polymer polyol or present in the process of preparing the polymer polyol.

As used herein, the phrase "total feed" refers to the sum of all quantities of components present in each of the various products (i.e., preformed stabilizers, polymer polyols, etc.) and/or present in the process of preparing each of the various products.

The following examples further illustrate details for the preparation and use of the compounds of this invention. Unless otherwise noted, all temperatures are degrees Celsius and all parts and percentages are parts by weight and percentages by weight, respectively.

EXAMPLES

The following components were used in the working examples.

| | |
|---|---|
| Polyol A: | A glycerine-started polyether polyol produced by reacting propylene oxide and ethylene oxide in the presence of potassium hydroxide catalyst, and refining to remove the catalyst. The resultant polyol has a hydroxyl number of about 52, a number average molecular weight of about 3235 and a functionality of about 3. |
| Polyol B: | A sorbitol-started polyether polyol produced by reacting propylene oxide and ethylene oxide in the presence of potassium hydroxide catalyst, and refining to remove the catalyst. The resultant polyol has a hydroxyl number of about 28, a number average molecular weight of about 12,020 and a functionality of about 6. |
| Catalyst A: | A polyurethane amine catalyst suitable for foams, sold by Dow Chemical Company as NIAX Catalyst A-1. |
| Catalyst B: | A polyurethane foam catalyst comprising stabilized stannous octoate, commercially available from Goldschmidt as K-29 or Kosmos 29. |
| Catalyst C: | a potassium hexacyanocobaltate catalyst; commercially available from Bayer Polymers LLC as Arcol Catalyst 3. |
| Surfactant A: | A silicone surfactant suitable for use in foam, commercially available from Dow Chemical Company as "Silicone Surfactant L-620." |
| BHT: | Butylated hydroxytoluene |
| TDI: | A mixture of 80 wt-% 2,4-diisocyanatotoluene and 20 wt-% 2,6-diisocyanatotoluene. |
| MDI | A mixture of 98 wt% 4,4'-methylenediphenyl diisocyanate and 2 wt% 2,4'-methylenediphenyl diisocyanate. |
| TMDB: | $\alpha,\alpha,\alpha',\alpha'$-tetramethyl-1,3-benzenedimethanol |
| Initiator A: | tert-butyl peroxide (TBPO) |
| Initiator B: | Azobis(isobutyronitrile), commercially available as VAZO 64 from DuPont. |

The following terms and units are also used in the working examples.

| | |
|---|---|
| Viscosity: | Viscosities were measured using a Cannon-Fenske viscometer. |
| 700-mesh filterability: | Filterability was determined by diluting 200 g polymer polyol with 400 g isopropanol, and pouring the mixture through a screen with a diameter of 1 ½ inches. The 700-mesh screen is a Dutch twill weave having a pore size of about 30 microns. The time required for all of the mixture to pass through the screen is measured. If all the mixture does not pass in 600 seconds, then the percentage that passed is recorded. |
| Density: | Density in ($lb/ft^3$) pounds per cubic foot. (conducted in accordance with ASTM D-3574, Test A). |
| IFD 25%: | Indentation Force Deflection 25% (conducted in accordance with ASTM D-3574, Test B1 and Test B2). |
| IFD 65%: | Indentation Force Deflection 65% (conducted in accordance with ASTM D-3574, Test B1 and Test B2). |
| IFD 65/25: | Indentation Force Deflection 65% divided by Indentation Force Deflection 25% (ASTM D-3574, Test B1 and Test B2). |
| Tensile: | Tensile strength in psi (conducted in accordance with ASTM D-3574, Test E). |
| Elongation: | Elongation in percent (conducted in accordance with ASTM D-3574, Test E). |
| Tear: | Tear resistance in pounds per inch (lb/in) (conducted in accordance with ASTM D-3574, Test F). |

Example 1:

This series of examples relates to the preparation of macromers based on monols (Example 1 a), and polyols (Example 1b).

Example 1a:

According to the invention:

TMBD (250g, 1.285 moles), BHT (0.3g), and 750 mL toluene were added to a 1 L flask and heated to 80°C to dissolve. Methanesulfonic acid catalyst (5g) was added and the reaction solution stirred at 80°C for 5 hours. Sodium bicarbonate (19g in 100 mL water) was added and stirred for 30 minutes to neutralize the methanesulfonic acid. The toluene layer was separated and washed with water, three times, using 200 mL of water/washing. The toluene was vacuum stripped to give 212 grams of product, i.e. 3-isopropenylcumenol.

3-Isopropenylcumenol (100g) and Catalyst C (concentration based on final product - 200 ppm) were added to a 1-L stainless steel vessel and sparged with nitrogen for 30 minutes. The vessel was sealed, evacuated, and 20g PO was added to activate the catalyst. An additional 704g of PO were added at 3 gram/minute to give 824 g of polyether monol with $MW_n$ = 1,540. A portion of this intermediate (about 230g) was further propoxylated (600g total PO at 3 g/min) to give a final product with $MW_n$ = 6,400 and a viscosity of 2,930 cSt at 25°C. The final product, referred to herein as Macromer 1 a, contained 1 mol of induced unsaturation/mol polyol.

Example 1b:

Comparative example:

Polyol B was charged to a stirred reactor and heated to 80°C. Maleic anhydride (0.889 wt.%, based on 100 wt. % of Polyol B) was then charged to the reactor. After the polyol and maleic anhydride mixture were adequately mixed, 60 ppm KOH was added and the mixture was reacted for 1 hr at 110°C. The acid groups were then capped with ethylene oxide (1.0 wt.%, based on 100 wt.% of Polyol B) by stirring the mixture at 110°C until the acid number was reduced to < 0.4 mg KOH/g. The mixture was then vacuum-stripped to remove residual EO, and reacted at 80°C with 1000 ppm morpholine for 6 hours.

To the resultant mixture prepared as described above, MDI (0.93 wt.%, based on 100 wt.% of Polyol B) was charged. The mixture was reacted at 63°C to reach the desired molecular weight, and was inhibited with 500 ppm BHT. The resultant product, referred to herein as Macromer 1 b, had a $MW_n$ = 6,000, and a viscosity of 6500 cSt. This product contained 0.71 mol induced unsaturation /mol polyol distributed randomly.

Example 2:

This series of examples relates to the preparation of pre-formed stabilizers (PFS's) made from macromers 1 a and 1 b as described above. The pre-formed stabilizers were all prepared by the following process.

The pre-formed stabilizer was prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously to the reactor from feed tanks through an in-line static mixer and then through a feed tube into the reactor, which was well mixed. The temperature of the reaction mixture was controlled at 120 ± 1 °C. The product from the second-stage reactor overflowed continuously through a pressure regulator designed to control the pressure in each stage at 65 psig (5.48 bar). The pre-formed stabilizer then passed through a cooler and into a collection vessel. The formulations used for the pre-formed stabilizer are shown in Table 1.

Table 1: Pre-formed stabilizers

| | Example 2a according to invention | Example 2b comparative |
|---|---|---|
| Diluent type | isopropanol | isopropanol |
| Diluent concentration in feed, wt-% | 60.0 | 60.0 |
| Macromer type | Example 1a | Example 1b |
| Macromer concentration in feed, wt-% | 24.0 | 24.0 |

(continued)

| | Example 2a according to invention | Example 2b comparative |
|---|---|---|
| Monomers concentration in feed, wt-% | 15.9 | 15.9 |
| Styrene/acrylonitrile ratio in feed, wt-% | 50/50 | 50/50 |
| Initiator A concentration, wt-% | 0.1 | 0.1 |

In the above table, the wt.% concentrations are based on the total feed.

Examples 3 - 5:

This series of examples relates to the preparation of polymer polyols made from pre-formed stabilizers 2a and 2b as described above. The polymer polyols were prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously from feed tanks through an in-line static mixer and then through a feed tube into the reactor, which was well mixed. The temperature of the reaction mixture was controlled at 115 ± 1°C. The product from the second-stage reactor overflowed continuously through a pressure regulator designed to control the pressure in each stage at 45 psig (3,1 bar). The polymer polyol then passed through a cooler and into a collection vessel. The crude product was vacuum stripped to remove volatiles. The wt-% total polymer in the product was calculated from the concentrations of monomers measured in the crude polymer polyol before stripping. The parameters used in the experiments are listed in Table 2.

Examples 4 and 5 indicate that the viscosities of polymer polyols made from PFS 2a are lower than that of polymer polyol Example 3, made from PFS 2b.

Table 2. Polymer polyols

| Parameter[1] | 3 | 4 | 5 |
|---|---|---|---|
| ***Preparation Conditions*** | | | |
| Initiator B concentration in feed, wt-% | 0.25 | 0.25 | 0.25 |
| Base polyol type | A | A | A |
| Base polyol concentration in feed, wt-% | 45.27 | 45.01 | 45.27 |
| Pre-formed stabilizer type | Ex 2b | Ex 2a | Ex 2a |
| PFS concentration in feed, wt-% | 1.32 | 1.58 | 1.32 |
| Isopropanol (in addition to PFS) concentration in feed, wt-% | 1.70 | 1.05 | 1.70 |
| Monomers concentration in feed, wt-% | 47.28 | 47.11 | 47.28 |
| Polymer styrene/acrylonitrile ratio | 1.87 | 1.87 | 1.87 |
| ***Product Properties*** | | | |
| Solids in stripped product, wt-% | 50.14 | 50.17 | 50.03 |
| Viscosity, cSt | 5337 | 4700 | 5026 |
| 700-mesh filterability, s or % | 560 s | 303 s | 267 s |

[1]wt% based on total feed

Examples 6-8:

This series of examples relates to the preparation of free-rise foams from the polymer polyols prepared in Examples 3 - 5. The polymer polyol, Catalyst A (an amine catalyst), water, and a silicone surfactant (L-620) were added to a one-half gallon (5,68 l) cylindrical paper container fitted with baffles. The contents were mixed at 2400 rpm for 60 seconds with an agitator having two turbine impellers. The mixture was then degassed for 10 seconds. After degassing, Catalyst B (a tin catalyst, K-29 from Goldschmidt) was added and the contents mixed at 2400 rpm for 10 seconds. While the mixer was still rotating, toluene diisocyanate was added and the contents mixed for 5 seconds. The mixture was then poured into a 14 by 14 by 6-inch (35.6 × 35.6 × 15.2 cm) cardboard box, where it rose freely until the reaction was complete. The foam was then heated in an oven at 225°C for 5 minutes. Foam properties were determined according to ASTM Standard D-3574-66. The parameters used in the experiments are listed in Table 3. Examples 6 - 8 demonstrate that the polymer polyols made from PFS based on polyether monol macromers yields polyurethane foams with physical

properties comparable to those made from conventional polyol macromers.

Table 3. Free-rise foams (Pphp denotes parts per hundred parts)

| Example Number<br>Parameter | 6 | 7 | 8 |
|---|---|---|---|
| ***Preparation Conditions*** | | | |
| Polymer polyol type | 3 | 4 | 5 |
| Polymer polyol, pphp | 100 | 100 | 100 |
| Water, pphp | 2.3 | 2.3 | 2.3 |
| Catalyst A, pphp | 0.03 | 0.03 | 0.03 |
| Catalyst B, pphp | 0.10 | 0.10 | 0.10 |
| Surfactant A, pphp | 0.45 | 0.45 | 0.45 |
| TDI, pphp | 30.5 | 30.5 | 30.5 |
| Index | 115 | 115 | 115 |
| ***Product Properties*** | | | |
| Density. $lbs/ft^3$ | 2.57 (41 $kgm^{-3}$) | 2.49 (40 $kgm^{-3}$) | 2.54 (41 $kgm^{-3}$) |
| IFD 25%, lbs | 128.6 (573 N) | 135.0 (601 N) | 132.7 (591 N) |
| IFD 65%, lbs | 287.7 (1281 N) | 284.9 (1269 N) | 287.9 (1282 N) |
| IFD 65/25 | 2.24 | 2.11 | 2.17 |
| Tensile,$lbs/in^2$ | 36.5 (251,5 kPa) | 35.5 (244,6 kPa) | 29.8 (205,3 kPa) |
| Elongation, % | 117.0 | 126.2 | 101.9 |
| Tear, lbs/in | 3.34 (0,6 $kgcm^{-1}$) | 2.82 (0,5 $kgcm^{-1}$) | 2.96 (0,53 $kgcm^{-1}$) |

**Claims**

**1.** A process for preparing an ethylenically unsaturated macromer comprising

(A) reacting

(1) a monofunctional compound represented by the formula:

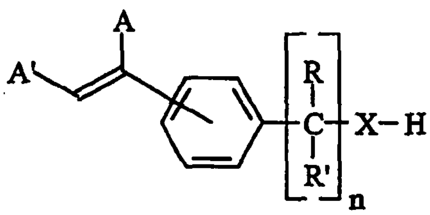

wherein:

A and A': each independently represent a hydrogen atom, an alkyl group containing from 1 to 10 carbon atoms which may or may not be substituted with one or more halogen atoms, or an aryl group containing from 5 to 6 carbon atoms which may or may not be substituted with one or more halogen atoms;
n: represents 1;
X: represents an oxygen atom or a sulfur atom;
and
R and R': each independently represent an alkyl group containing from 1 to 10 carbon atoms which may or may not be substituted with one or more oxygen atoms or one or more halogen atoms;

with
(2) at least one alkylene oxide containing from 2 to 8 carbon atoms, wherein the carbon atoms may be aliphatically bound, aromatically bound, cycloaliphatically bound or a combination thereof;

in the presence of
(3) at least one double metal cyanide alkoxylation catalyst.

2. The process of Claim 1, wherein in said monofunctional compound:

A and A': each independently represents a hydrogen atom, a methyl group, an ethyl group, a propyl group, a butyl group, a hexyl group, a cyclohexyl group, a phenyl group, or a chloromethyl group;
n: represents 1;
X: represents an oxygen atom or a sulfur atom;
and
R and R': each independently represents a methyl group, an ethyl group, a propyl group, a butyl group, a pentyl group, a cyclopentyl group, a hexyl group, a cyclohexyl group, or a phenyl group.

3. The process of Claim 1, wherein said monofunctional compound is 3-isopropenylcumenol.

4. The process of Claim 1, wherein said alkylene oxide is selected from the group consisting of ethylene oxide, propylene oxide, butylene oxide, glycidol and mixtures thereof.

5. An ethylenically unsaturated macromer represented by the formula:

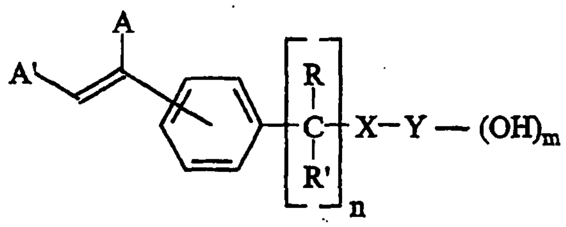

wherein:

A and A': each independently represent a hydrogen atom, an alkyl radical containing from 1 to 10 carbon atoms which may or may not be substituted with one or more halogen atoms, or an aryl radical containing from 5 to 6 carbon atoms which may or may not be substituted with one or more halogen atoms;
n: represents 1;
X: represents an oxygen atom or a sulfur atom;
R and R': each independently represent an alkyl radical containing from 1 to 10 carbon atoms which may or may not be substituted with one or more oxygen atoms or one or more halogen atoms;
Y: represents a polymerized form of at least one alkylene oxide containing from 2 to 8 carbon atoms, wherein the carbon atoms may be aliphatically bound, aromatically bound, cycloaliphatically bound or a combination thereof,
and
m: represents an integer from 1 to 15.

6. The ethylenically unsaturated macromer of Claim 5, wherein the molecular weight ranges from about 170 to about 30,000.

7. The ethylenically unsaturated macromer of Claim 5, wherein

A and A': each independently represents a hydrogen atom, a methyl group, an ethyl group, a propyl group, a butyl group, a hexyl group, a cyclohexyl group, a phenyl group, or a chloromethyl group;
n: represents 1;
X: represents an oxygen atom or a sulfur atom;
R and R': each independently represents a methyl group, an ethyl group, a propyl group, a butyl group, a pentyl group, a cyclopentyl group, a hexyl group, a cyclohexyl group, or a phenyl group;
Y: represents a polymerized form of ethylene oxide, propylene oxide, butylene oxide, glycidol, or mixtures thereof;
and

m: represents an integer from 1 to 10.

**8.** The ethylenically unsaturated macromer of Claim 5, wherein the molecular weight ranges from 3,000 to 20,000.

**9.** The ethylenically unsaturated macromer of Claim 5, wherein the molecular weight ranges from 3,000 to 10,000.

**10.** A process for preparing a pre-formed stabilizer comprising:

(A) free-radically polymerizing:

(1) an ethylenically unsaturated macromer represented by the formula:

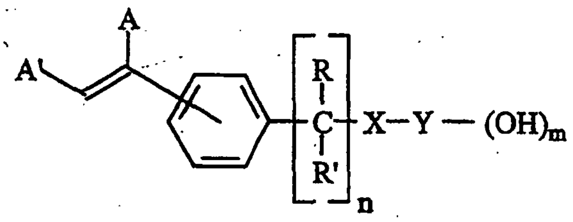

wherein:

A and A': each independently represent a hydrogen atom, an alkyl radical containing from 1 to 10 carbon atoms which may or may not be substituted with one or more halogen atoms, or an aryl radical containing from 5 to 6 carbon atoms which may or may not be substituted with one or more halogen atoms;
n: represents 1;
X: represents an oxygen atom or a sulfur atom
R and R': each independently represent an alkyl radical containing from 1 to 10 carbon atoms which may or may not be substituted with one or more oxygen atoms or one or more halogen atoms;
Y: represents a polymerized form of at least one alkylene oxide containing from 2 to 8 carbon atoms, wherein the carbon atoms may be aliphatically bound, aromatically bound, cycloaliphatically bound or a combination thereof;
and
m: represents an integer of from 1 to 15;

with
(2) at least one ethylenically unsaturated monomer;
in the presence of:
(3) at least one free-radical polymerization initiator;
and,
(4) a liquid diluent;
and, optionally,
(5) a chain transfer agent.

**11.** The process of Claim 10, wherein (1) said ethylenically unsaturated macromer corresponds to the same formula, wherein:

A and A': each independently represents a hydrogen atom, a methyl group, an ethyl group, a propyl group, a butyl group, a hexyl group, a cyclohexyl group, a phenyl group, or a chloromethyl group;
n: represents 1;
X: represents an oxygen atom or a sulfur atom;
R and R': each independently represents a methyl group, an ethyl group, a propyl group, a butyl group, a pentyl group, a cyclopentyl group, a hexyl group, a cyclohexyl group, or a phenyl group;
Y: represents a polymerized form of ethylene oxide, propylene oxide, butylene oxide, glycidol or mixtures thereof;
and
m: represents an integer of from 1 to 10.

**12.** The process of Claim 10, wherein said ethylenically unsaturated macromer has a molecular weight of from 170 to 30,000.

**13.** The process of Claim 10, wherein (2) said ethylenically unsaturated monomer is selected from the group consisting of: styrene, acrylonitrile and mixtures thereof.

**14.** The process of Claim 10, wherein (2) said ethylenically unsaturated monomer comprises a mixture of styrene and acrylonitrile in a weight ratio of styrene to acrylonitrile of from 80:20 to 50:50.

**15.** The process of Claim 10, wherein (3) said free-radical polymerization initiator is selected from the group consisting of alkyl hydroperoxides, aryl hydroperoxides, persulfates, perborates, percarbonates, azo compounds and mixtures thereof.

**16.** The process of Claim 10, wherein (3) said free-radical polymerization initiator is present in an amount of from 0.01 to 2% by weight, based on the total weight of components (1), (2), (3), (4), and (5).

**17.** The process of Claim 10, wherein (4) said diluent is selected from the group consisting of monohydroxyl alcohols, polyols, hydrocarbons, ethers and mixtures thereof.

**18.** The process of Claim 17, wherein said monohydroxy alcohol is selected from the group consisting of methanol, ethanol, n-propanol, isopropanol, n-butanol, sec-butanol, tert-butanol, n-pentanol, 2-pentanol, 3-pentanol and mixture thereof.

**19.** The process of Claim 17, wherein said polyol comprises an poly(oxypropyleneoxyethylene) polyol having an oxyethylene content of less than 50% by weight, based on 100% by weight of oxyalkylene groups, and contains low unsaturation.

**20.** A pre-formed stabilizer obtainable by the process of any one of claims 10 to 19.

**21.** Use of the pre-formed stabilizer of claim 20 or the macromer of claims 5 in the preparation of polymer polyols.

**Patentansprüche**

**1.** Verfahren zur Herstellung eines ethylenisch ungesättigten Makromers, das Folgendes umfasst:

(A) das Umsetzen

(1) einer monofunktionellen Verbindung der Formel:

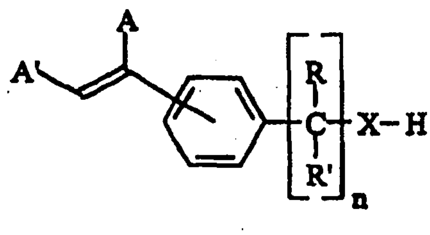

worin:

A und A': jeweils unabhängig voneinander für ein Wasserstoffatom, eine Alkylgruppe mit 1 bis 10 Kohlenstoffatomen, die gegebenenfalls mit einem oder mehreren Halogenatomen substituiert ist, oder eine Arylgruppe mit 5 bis 6 Kohlenstoffatomen stehen, die gegebenenfalls mit einem oder mehreren Halogenatomen substituiert ist;
n: für 1 steht;
X: für ein Sauerstoffatom oder ein Schwefelatom steht; und

R und R': jeweils unabhängig voneinander für eine Alkylgruppe mit 1 bis 10 Kohlenstoffatomen stehen, die gegebenenfalls mit einem oder mehreren Sauerstoffatomen oder mit einem oder mehreren Halogenatomen substituiert ist;

mit
(2) zumindest einem Alkylenoxid mit 2 bis 8 Kohlenstoffatomen, worin die Kohlenstoffatome aliphatisch, aromatisch, cycloaliphatisch oder in Form einer Kombination davon gebunden sein können;
in Gegenwart von
(3) zumindest einem Doppelmetallcanid-Alkoxylierungskatalysator.

2. Verfahren nach Anspruch 1, worin in der monofunktionellen Verbindung:

A und A': jeweils unabhängig voneinander für ein Wasserstoffatom, eine Methylgruppe, eine Ethylgruppe, eine Propylgruppe, eine Butylgruppe, eine Hexylgruppe, eine Cyclohexylgruppe, eine Phenylgruppe oder eine Chlormethylgruppe stehen;
n: für 1 steht;
X: für ein Sauerstoffatom oder ein Schwefelatom steht; und
R und R': jeweils unabhängig voneinander für eine Methylgruppe, eine Ethylgruppe, eine Propylgruppe, eine Butylgruppe, eine Pentylgruppe, eine Cyclopentylgruppe, eine Hexylgruppe, eine Cyclohexylgruppe oder eine Phenylgruppe stehen.

3. Verfahren nach Anspruch 1, worin die monofunktionelle Verbindung 3-Isopropenylcumenol ist.

4. Verfahren nach Anspruch 1, worin das Alkylenoxid aus der aus Ethylenoxid, Propylenoxid, Butylenoxid, Glycidol und Gemischen davon bestehenden Gruppe ausgewählt wird.

5. Ethylenisch ungesättigtes Makromer der Formel:

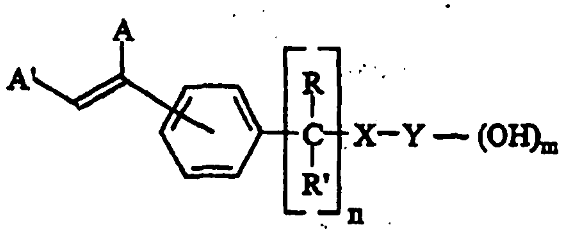

worin:

A und A': jeweils unabhängig voneinander für ein Wasserstoffatom, einen Alkylrest mit 1 bis 10 Kohlenstoffatomen, der gegebenenfalls mit einem oder mehreren Halogenatomen substituiert ist, oder einen Arylrest mit 5 bis 6 Kohlenstoffatomen stehen, der gegebenenfalls mit einem oder mehreren Halogenatomen substituiert ist;
n: für 1 steht;
X: für ein Sauerstoffatom oder ein Schwefelatom steht;
R und R': jeweils unabhängig voneinander für einen Alkylrest mit 1 bis 10 Kohlenstoffatomen stehen, der gegebenenfalls mit einem oder mehreren Sauerstoffatomen oder einem oder mehreren Halogenatomen substituiert ist;
Y: für eine polymerisierte Form zumindest eines Alkylenoxids mit 2 bis 8 Kohlenstoffatomen steht, worin die Kohlenstoffatome aliphatisch, aromatisch, cycloaliphatisch oder in Form einer Kombination davon gebunden sein können; und
m: für eine ganze Zahl von 1 bis 15 steht.

6. Ethylenisch ungesättigtes Makromer nach Anspruch 5, worin das Molekulargewicht im Bereich von etwa 170 bis etwa 30.000 liegt.

7. Ethylenisch ungesättigtes Makromer nach Anspruch 5, worin:

A und A': jeweils unabhängig voneinander für ein Wasserstoffatom, eine Methylgruppe, eine Ethylgruppe, eine Propylgruppe, eine Butylgruppe, eine Hexylgruppe, eine Cyclohexylgruppe, eine Phenylgruppe oder eine Chlormethylgruppe stehen;
n: für 1 steht;
X: für ein Sauerstoffatom oder ein Schwefelatom steht;
R und R': jeweils unabhängig voneinander für eine Methylgruppe, eine Ethylgruppe, eine Propylgruppe, eine Butylgruppe, eine Pentylgruppe, eine Cyclopentylgruppe, eine Hexylgruppe, eine Cyclohexylgruppe oder eine Phenylgruppe stehen;
Y: für eine polymerisierte Form von Ethylenoxid, Propylenoxid, Butylenoxid, Glycidol oder Gemische davon steht; und
m: für eine ganze Zahl von 1 bis 10 steht.

**8.** Ethylenisch ungesättigtes Polymer nach Anspruch 5, worin das Molekulargewicht im Bereich von 3.000 bis 20.000 liegt.

**9.** Ethylenisch ungesättigtes Polymer nach Anspruch 5, worin das Molekulargewicht in einem Bereich von 3.000 bis 10.000 liegt.

**10.** Verfahren zur Herstellung eines vorgeformten Stabilisators, das Folgendes umfasst:

(A) radikalische Polymerisation von:

(1) einem ethylenisch ungesättigten Makromer der Formel:

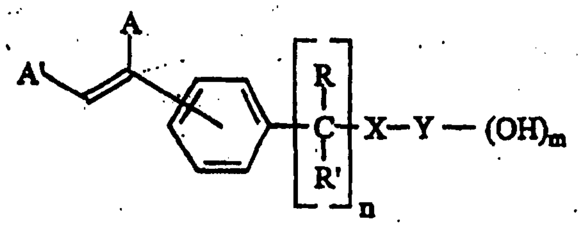

worin:

A und A': jeweils unabhängig voneinander für ein Wasserstoffatom, einen Alkylrest mit 1 bis 10 Kohlenstoffatomen, der gegebenenfalls mit einem oder mehreren Halogenatomen substituiert ist, oder einen Arylrest mit 5 bis 6 Kohlenstoffatomen stehen, der gegebenenfalls mit einem oder mehreren Halogenatomen substituiert ist;
n: für 1 steht;
X: für ein Sauerstoffatom oder ein Schwefelatom steht;
R und R': jeweils unabhängig voneinander für einen Alkylrest mit 1 bis 10 Kohlenstoffatomen stehen, der gegebenenfalls mit einem oder mehreren Sauerstoffatomen oder einem oder mehreren Halogenatomen substituiert ist;
Y: für eine polymerisierte Form zumindest eines Alkylenoxids mit 2 bis 8 Kohlenstoffatomen steht, worin die Kohlenstoffatome aliphatisch, aromatisch, cycloaliphatisch oder in Form einer Kombination davon gebunden sein können; und
m: für eine ganze Zahl von 1 bis 15 steht;

mit
(2) zumindest einem ethylenisch ungesättigten Monomer;
in Gegenwart von:
(3) zumindest einem radikalischen Polymerisationsinitiator;
und
(4) einem flüssigen Verdünnungsmittel
und, gegebenenfalls,
(5) einem Kettenüberträger.

**11.** Verfahren nach Anspruch 10, worin (1) das ethylenisch ungesättigte Makromer derselben Formel entspricht, worin:

A und A': jeweils unabhängig voneinander für ein Wasserstoffatom, eine Methylgruppe, eine Ethylgruppe, eine Propylgruppe, eine Butylgruppe, eine Hexylgruppe, eine Cyclohexylgruppe, eine Phenylgruppe oder eine Chlormethylgruppe stehen;
n: für 1 steht;
X: für ein Sauerstoffatom oder ein Schwefelatom steht;
R und R': jeweils unabhängig voneinander für eine Methylgruppe, eine Ethylgruppe, eine Propylgruppe, eine Butylgruppe, eine Pentylgruppe, eine Cyclopentylgruppe, eine Hexylgruppe, eine Cyclohexylgruppe oder eine Phenylgruppe stehen;
Y: für eine polymerisierte Form von Ethylenoxid, Propylenoxid, Butylenoxid, Glycidol oder Gemische davon steht; und
m: für eine ganze Zahl von 1 bis 10 steht.

**12.** Verfahren nach Anspruch 10, worin das ethylenisch ungesättigte Monomer ein Molekulargewicht von 170 bis 30.000 aufweist.

**13.** Verfahren nach Anspruch 10, worin (2) das ethylenisch ungesättigte Monomer aus der aus Styrol, Acrylnitril und Gemischen davon bestehenden Gruppe ausgewählt wird.

**14.** Verfahren nach Anspruch 10, worin (2) das ethylenisch ungesättigte Monomer ein Gemisch aus Styrol und Acrylnitril in einem Gewichtsverhältnis von Styrol zu Acrylnitril von 80:20 bis 50:50 umfasst.

**15.** Verfahren nach Anspruch 10, worin (3) der radikalische Polymerisationsinitiator aus der aus Alkylhydroperoxiden, Arylhydroperoxiden, Persulfaten, Perboraten, Percarbonaten, Azo-Verbindungen und Gemischen davon bestehenden Gruppe ausgewählt wird.

**16.** Verfahren nach Anspruch 10, worin (3) der radikalische Polymerisationsinitiator, bezogen auf das Gesamtgewicht der Komponenten (1), (2), (3), (4) und (5), in einer Menge von 0,01 bis 2 Gew.-% vorhanden ist.

**17.** Verfahren nach Anspruch 10, worin (4) das Verdünnungsmittel aus der aus einwertigen Alkoholen, Polyolen, Kohlenwasserstoffen, Ethern und Gemischen davon bestehenden Gruppe ausgewählt wird.

**18.** Verfahren nach Anspruch 17, worin der einwertige Alkoholen aus der aus Methanol, Ethanol, n-Propanol, Isopropanol, n-Butanol, sec-Butanol, tert-Butanol, n-Pentanol, 2-Pentanol, 3-Pentanol und Gemischen davon bestehenden Gruppe ausgewählt wird.

**19.** Verfahren nach Anspruch 17, worin das Polyol ein Poly(oxypropylen-oxyethylen)-Polyol mit einem Oxyethylengehalt von weniger als 50 Gew.-%, bezogen auf 100 Gew.-% der Oxyalkylengruppen, umfasst und eine geringe Unsättigung aufweist.

**20.** Vorgeformter Stabilisator, der durch ein Verfahren nach einem der Ansprüche 10 bis 19 erhältlich ist.

**21.** Verwendung eines vorgeformten Stabilisators nach Anspruch 20 oder eines Makromers nach Anspruch 5 zur Herstellung von Polymerpolyolen.

**Revendications**

**1.** Procédé pour la préparation d'un macromère éthyléniquement insaturé comprenant les étapes consistant

(A) à faire réagir

(1) un composé monofonctionnel représenté par la formule :

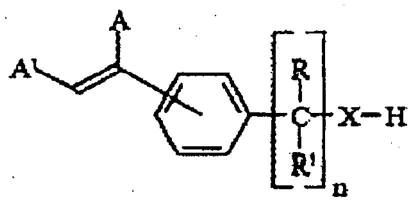

dans laquelle :

A et A' : représentent chacun indépendamment un atome d'hydrogène, un groupe alkyle contenant de 1 à 10 atomes de carbone qui peuvent être ou peuvent ne pas être substitués par un ou plusieurs atomes d'halogène, ou un groupe aryle contenant de 5 à 6 atomes de carbone qui peuvent être ou peuvent ne pas être substitués par un ou plusieurs atomes d'halogène ;
n : représente 1 ;
X : représente un atome d'oxygène ou un atome de soufre ;
et
R et R' : représentent chacun indépendamment un groupe alkyle contenant de 1 à 10 atomes de carbone qui peuvent être ou peuvent ne pas être substitués par un ou plusieurs atomes d'oxygène ou un ou plusieurs atomes d'halogène ;

avec
(2) au moins un oxyde d'alkylène contenant de 2 à 8 atomes de carbone, dans lequel les atomes de carbone peuvent être liés de manière aliphatique, liés de manière aromatique, liés de manière cycloaliphatique ou bien une combinaison de ce qui précède;
en présence
(3) d'au moins un catalyseur d'alcoxylation à base de cyanure métallique double.

2. Procédé selon la revendication 1, dans lequel dans ledit composé monofonctionnel :

A et A' : représentent chacun indépendamment un atome d'hydrogène, un groupe méthyle, un groupe éthyle, un groupe propyle, un groupe butyle, un groupe hexyle, un groupe cyclohexyle, un groupe phényle, ou un groupe chlorométhyle ;
n : représente 1 ;
X : représente un atome d'oxygène ou un atome de soufre;
et
R et R' : représentent chacun indépendamment un groupe méthyle, un groupe éthyle, un groupe propyle, un groupe butyle, un groupe pentyle, un groupe cyclopentyle, un groupe hexyle, un groupe cyclohexyle, ou un groupe phényle.

3. Procédé selon la revendication 1, dans lequel ledit composé monofonctionnel est le 3-isopropényl-cuménol.

4. Procédé selon la revendication 1, dans lequel ledit oxyde d'alkylène est choisi dans le groupe comprenant l'oxyde d'éthylène, l'oxyde de propylène, l'oxyde de butylène, le glycidol et les mélanges de ceux-ci.

5. Macromère éthyléniquement Insaturé représenté par la formule :

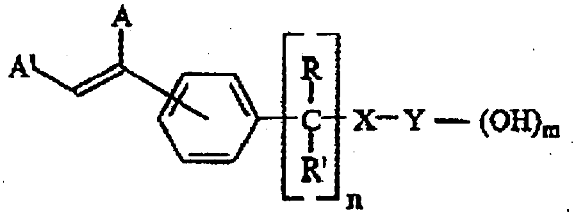

dans laquelle :

A et A' : représentent chacun indépendamment un atome d'hydrogène, un radical alkyle contenant de 1 à 10 atomes de carbone qui peuvent être ou peuvent ne pas être substitués par un ou plusieurs atomes d'halogène, ou un radical aryle contenant de 5 à 6 atomes de carbone qui peuvent être ou peuvent ne pas être substitués par un ou plusieurs atomes d'halogène ;
n : représente 1 ;
X : représente un atome d'oxygène ou un atome de soufre ;
R et R' : représentent chacun indépendamment un radical alkyle contenant de 1 à 10 atomes de carbone qui peuvent être ou peuvent ne pas être substitués par un ou plusieurs atomes d'oxygène ou un ou plusieurs atomes d'halogène ;
Y : représente une forme polymérisée d'au moins un oxyde d'alkylène contenant de 2 à 8 atomes de carbone, dans lequel les atomes de carbone peuvent être liés de manière aliphatique, liés de manière aromatique, liés de manière cycloaliphatique ou bien une combinaison de ce qui précède,
et
m : représente un nombre entier allant de 1 à 15.

6. Macromère éthyléniquement insaturé selon la revendication 5, dans lequel le poids moléculaire est dans la gamme allant d'environ 170 à environ 30 000.

7. Macromère éthyléniquement insaturé selon la revendication 5, dans lequel

A et A' : représentent chacun indépendamment un atome d'hydrogène, un groupe méthyle, un groupe éthyle, un groupe propyle, un groupe butyle, un groupe hexyle, un groupe cyclohexyle, un groupe phényle, ou un groupe chlorométhyle ;
n : représente 1 ;
X : représente un atome d'oxygène ou un atome de soufre ;
R et R' : représentent chacun indépendamment un groupe méthyle, un groupe éthyle, un groupe propyle, un groupe butyle, un groupe pentyle, un groupe cyclopentyle, un groupe hexyle, un groupe cyclohexyle, ou un groupe phényle
Y : représente une forme polymérisée de l'oxyde d'éthylène, de l'oxyde de propylène, de l'oxyde de butylène, du glycidol, ou des mélanges de ceux-ci ;
et
m : représente un nombre entier allant de 1 à 10.

8. Macromère éthyléniquement insaturé selon la revendication 5, dans lequel le poids moléculaire est dans la gamme allant de 3 000 à 20 000.

9. Macromère éthyléniquement insaturé selon la revendication 5, dans lequel le poids moléculaire est dans la gamme allant de 3 000 à 10 000.

10. Procédé pour la préparation d'un stabilisateur préformé comprenant les étapes consistant :

(A) à polymériser de manière radicalaire :

(1) un macromère éthyléniquement insaturé représenté par la formule :

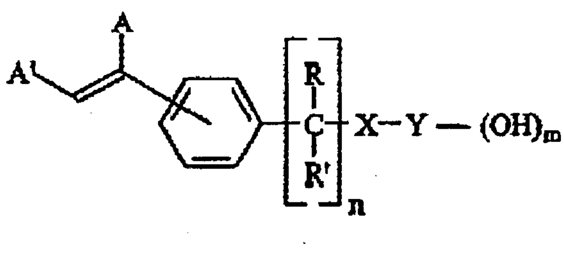

dans laquelle :

A et A' : représentent chacun indépendamment un atome d'hydrogène, un radical alkyle contenant de 1 à 10 atomes de carbone qui peuvent être ou peuvent ne pas être substitués par un ou plusieurs atomes d'halogène, ou un radical aryle contenant de 5 à 6 atomes de carbone qui peuvent être ou peuvent ne pas être substitués par un ou plusieurs atomes d'halogène ;
n : représente 1 ;
X : représente un atome d'oxygène ou un atome de soufre ;
R et R' : représentent chacun indépendamment un radical alkyle contenant de 1 à 10 atomes de carbone qui peuvent être ou peuvent ne pas être substitués par un ou plusieurs atomes d'oxygène ou un ou plusieurs atomes d'halogène ;
Y : représente une forme polymérisée d'au moins un oxyde d'alkylène contenant de 2 à 8 atomes de carbone, dans lequel les atomes de carbone peuvent être liés de manière aliphatique, liés de manière aromatique, liés de manière cycloaliphatique ou bien une combinaison de ce qui précède;
et
m : représente un nombre entier allant de 1 à 15 ;
avec

(2) au moins un monomère éthyléniquement insaturé ;
en présence :
(3) d'au moins un initiateur de polymérisation radicalaire ;
et
(4) d'un diluant liquide ;
et, facultativement,
(5) d'un agent de transfert de chaîne.

**11.** Procédé selon la revendication 10, dans lequel (1) ledit macromère éthyléniquement insaturé correspond à la même formule, dans laquelle :

A et A' : représentent chacun indépendamment un atome d'hydrogène, un groupe méthyle, un groupe éthyle, un groupe propyle, un groupe butyle, un groupe hexyle, un groupe cyclohexyle, un groupe phényle, ou un groupe chlorométhyle ;
n : représente 1 ;
X : représente un atome d'oxygène ou un atome de soufre ;
R et R' : représentent chacun indépendamment un groupe méthyle, un groupe éthyle, un groupe propyle, un groupe butyle, un groupe pentyle, un groupe cyclopentyle, un groupe hexyle, un groupe cyclohexyle, ou un groupe phényle ;
Y : représente une forme polymérisée de l'oxyde d'éthylène, de l'oxyde de propylène, de l'oxyde de butylène, du glycidol, ou des mélanges de ceux-ci;
et
m : représente un nombre entier allant de 1 à 10.

**12.** Procédé selon la revendication 10, dans lequel ledit macromère éthyléniquement insaturé a un poids moléculaire allant de 170 à 30 000.

**13.** Procédé selon la revendication 10, dans lequel (2) ledit monomère éthyléniquement insaturé est choisi dans le groupe comprenant : le styrène, l'acrylonitrile et les mélanges de ceux-ci.

**14.** Procédé selon la revendication 10, dans lequel (2) ledit monomère éthyléniquement insaturé comprend un mélange de styrène et d'acrylonitrile dans un rapport pondéral du styrène sur l'acrylonitrile allant de 80 : 20 à 50 : 50.

**15.** Procédé selon la revendication 10, dans lequel (3) ledit initiateur de polymérisation radicalaire est choisi dans le groupe comprenant les hydroperoxydes d'alkyle, les hydroperoxydes d'aryle, les persulfates, les perborates, les percarbonates, les composés azoïques, et les mélanges de ceux-ci.

**16.** Procédé selon la revendication 10, dans lequel (3) ledit initiateur de polymérisation radicalaire est présent dans une quantité allant de 0,01 à 2 % en poids, sur la base du poids total des composants (1), (2), (3), (4), et (5).

**17.** Procédé selon la revendication 10, dans lequel (4) ledit diluant est choisi dans le groupe comprenant les alcools monohydroxylés, les polyols, les hydrocarbures, les éthers, et les mélanges de ceux-ci.

**18.** Procédé selon la revendication 17, dans lequel ledit alcool monohydroxylé est choisi dans le groupe comprenant le méthanol, l'éthanol, le n-propanol, l'isopropanol, le n-butanol, le sec-butanol, le tert-butanol, le n-pentanol, le 2-pentanol, le 3-pentanol, et les mélanges de ceux-ci.

**19.** Procédé selon la revendication 17, dans lequel ledit polyol comprend un polyol de poly (oxypropylène oxyéthylène) ayant une teneur en oxyéthylène inférieure à 50 % en poids, sur la base dé 100 % en poids de groupes oxyalkylène, et contient une faible insaturation.

**20.** Stabilisateur préformé pouvant être obtenu par le procédé selon l'une quelconque des revendications 10 à 19.

**21.** Utilisation du stabilisateur préformé selon la revendication 20 ou du macromère selon la revendication 5 dans la préparation de polyols de polymère.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6013731 A
- EP 0162589 A
- US 5196476 A
- EP 0786480 A
- US 5990185 A
- US 4202947 A
- US 4394491 A
- US 4477603 A
- US 4493908 A
- US 4500675 A
- US 4663475 A
- US 4513124 A
- US 4588830 A
- US 4640935 A
- US 5854386 A
- US 4680358 A
- US 3622636 A
- US 6018017 A
- US 3073788 A
- US 4148840 A
- US 4242249 A
- US 4954561 A
- US 4745153 A
- US 5494957 A
- US 6455603 B
- US 4327005 A
- US 4334049 A
- US 4997857 A
- US 5268418 A
- US 5990232 A
- US 5554662 A
- US 5594066 A
- US 5814699 A
- US 5854358 A
- US 3875258 A
- US 3931092 A
- US 3950317 A
- US 3953393 A
- US 4014846 A
- US 4093573 A
- US 4372005 A
- US 4454255 A
- US 4458038 A
- US 4689354 A
- US 4690956 A
- US RE29014 E
- US 4305861 A
- US 5093412 A
- US 5254667 A
- US 6172164 B
- US RE33291 E
- US 4524157 A
- US 4539340 A
- US RE28715 E
- US RE29118 E
- US 5916476 A


### Non-patent literature cited in the description


- **JERRY MARCH.** Advanced Organic Chemistry. 1977, 923